# EUROPÄISCHE PATENTSCHRIFT

(11) **EP 1 058 436 B1**
(45) Veröffentlichungstag und Bekanntmachung des Hinweises auf die Patenterteilung: **16.08.2006**
(21) Anmeldenummer: 00201793.7
(22) Anmeldetag: 22.05.2000
(51) Int. Cl.: H04L 29/06, H04L 12/28

(54) **Netzwerk mit einer auf allen Terminals verteilten Software**
Network with software distributed on all terminals
Réseau avec du logiciel distribué sur tous les terminaux

(30) Priorität: 29.05.1999 DE 19224795
(43) Veröffentlichungstag der Anmeldung: 06.12.2000
(73) Patentinhaber: Philips Intellectual Property & Standards GmbH, 20099 Hamburg (DE); Koninklijke Philips Electronics N.V., 5621 BA Eindhoven (NL)
(72) Erfinder: Abramowski, Stefan, Habsburgerallee 11, 52064 Aachen (DE); Baldus, Heribert, Habsburgerallee 11, 52064 Aachen (DE); Helbig, Tobias, Habsburgerallee 11, 52064 Aachen (DE); Stut, Wim, Habsburgerallee 11, 52064 Aachen (DE); Eggenhuisen, Huibert Henk, Habsburgerallee 11, 52064 Aachen (DE)
(74) Vertreter: Volmer, Georg

(56) Entgegenhaltungen:
- EP-A- 0 637 157
- WO-A-98/16886
- GB-A- 2 242 293
- ITOH J-I ET AL: "A NEW SOFTWARE ARCHITECTURE FOR EVOLVABLE MULTIMEDIA SOFTWARE" EUROPEAN TRANSACTIONS ON TELECOMMUNICATIONS, EUREL PUBLICATION, MILANO, IT, Bd. 8, Nr. 4, 1. Juli 1997 (1997-07-01), Seiten 423-435, XP000695449 ISSN: 1124-318X
- EVAIN J-P: "THE MULTIMEDIA HOME PLATFORM" EBU REVIEW- TECHNICAL, EUROPEAN BROADCASTING UNION. BRUSSELS, BE, Nr. 275, 21. März 1998 (1998-03-21), Seiten 4-10, XP000767493 ISSN: 0251-0936
- MARKWATER B ET AL: "Design techniques for plug-and-play in smart homes and consumer products" ELECTRONIC DESIGN, PENTON PUBLISHING, CLEVELAND, OH, US, Bd. 45, Nr. 17, 18. August 1997 (1997-08-18), Seiten 64-66,68, XP002105592 ISSN: 0013-4872

## Beschreibung

Die Erfindung bezieht sich auf ein Netzwerk mit Terminals und einem auf allen Terminals verteilten Softwaresystem wenigstens zur Einbindung eines oder mehrerer Terminals in Anwendungen.

Ein solches Netzwerk ist aus Ralf Steinmetz (Hrsg.): "Kommunikation in verteilten Systemen (KiVS)", 11. ITG/GI-Fachtagung, Darmstadt, 2.-5. März 1999; Stephan Abramowski, Heribert Baldus, Tobias Helbig: "Digitale Netze in Wohnungen - Unterhaltungselektronik im Umbruch", Seiten 340 bis 351, bekannt. Es werden in dieser Veröffentlichung Anforderungen für ein zukünftiges Netzwerk im Heimbereich mit der darin verwendeten Software beschrieben. Wie in einem solchen Netzwerk Anwendungen gesteuert werden, wird nicht näher beschrieben. Eine solche Anwendung kann beispielsweise eine "digitale Videoverteilung" sein, bei der mittels verschiedener Terminals, wie z.B. Decoder, Demultiplexer und Bildschirm ein bestimmter Fernsehkanal empfangen und auf dem Bildschirm dargestellt wird.

Aus WO 98/16686 A ist ein Steuerungssystem für elektronische Konsumgütergeräte bekannt, bei dem für jedes "reale" Gerät eine abstrakte Softwareabbildung vorgesehen ist, die das entsprechende Gerät repräsentiert und die über eine Benutzerschnittstelle verfügt, welche auf reinem messaging basiert, Die abstrakte Softwareabbildung ist in der Lage, sich eigenständig direkte in einer Registry zu registrieren. Weiterhin ist eine Steuerungseinheit vorgesehen, welche direkt auf die abstrakte Softwareabbildung einwirkt. Die abstrakte Softwareabbildung und die Steuerungseinheit sind in einer Umgebung eingebettet, welche den einzelnen Applikationen anforderungsabhängig Ressourcen zuordnet.

In EP-A-0 637 157 ist ein zentrales Steuerungssystem für vemetzte Multimediageräte offenbart. Das Steuerungssystem umfasst eine Vielzahl peripherer Geräte, welche in Form von Objekten abgebildet sind, sowie einen Controller, der mit den Geräten über ein lokales Netzwerks (LAN) verbunden ist. Der Controller lädt von dem jeweiligen Gerät dessen Objektdaten herunter, um ein entsprechendes Objekt des Gerätes zu bilden. Instruktionen des Controllers erfolgen über das zugeordnete Objekt entsprechend einer Manipulation eines vom Controller auf Basis der Objektdaten erstellten und angezeigten Bildes. Die Benutzerinteraktion mit dem vemetzten System erfolgt durch Interaktion mit den einzelnen durch Icons dargestellten Geräten.

Itoh J-I et al: "A new software architecture for evolvable multimedia software" european transactions on telecommunications, Eurel Publication, Milano, IT, Bd. 8, Nr. 4, 1. Juli 1997 betrifft eine virtuelle Maschine sowie eine damit korrespondierende Systemschnittstelle zum Download von Software auf eine Set-Top-Box. Die Schnittstelle umfasst eine Methode um ein Objekte zu einem Metaraum zu migrieren. Es wird die Spezifikation einer "Micro Virtual Machine" verwendet, welche die Hardware und das Micro Kemel Operating System abstrahiert. Insofern unterscheidet sich die offenbarte virtuelle Maschine von traditionellen virtuellen Maschinen wie Java.

In GB-A-2 242 293 ist eine Vorrichtung sowie ein Verfahren zur dynamischen Verlinkung von objektorientierten Softwerekvmponenten während der Ausführung des Programms offenbart. Dabei ist eine Abfragefunktion vorgesehen, welche es erlaubt, während der Programniausfuhrung den Namen und Ort von Bibliotheksklassen zu ermitteln, welche zur Nutzung verfügbar sind. Darüber hinaus ist es einer Applikationskomponente ennöglicht, Instanzen von abgeleiteten Klassen einer abstrakten Basisklasse zu schaffen. Dabei kann die Applikationskomponente das so instantiierte Objekt durch Nutzung der abstrakten Schnittstelle manipulieren, welche durch die Basisklasse bereitgestellt wird.

Evain J-P; "The multimedia home platform" Ebu review-technical, European broadcasting union. Brussels BE, Nr. 275, 21. März 1998 behandelt einen Überblick über Multimedia Home-Plattformen. Es werden Technologien behandelt, welche erforderlich sind, um digital interaktives Multimedia im Privatbereich zu implementieren, einschließlich Protokolle, API-Sprachen sowie Schnittstellen.

Markwater B et al: "Desiga techniques for plug-and-play in smart homes and consumer products" Electronic Design, Penton Publishing, Cleveland, OH, US, Bd. 45, Nr. 17, 18. August 1997 behandelt plug-and-play-Techniken für "smart homes" und Konsumgütergeräte als Standard für versetzte Home-Subsysteme.

Der Erfindung liegt die Aufgabe zugrunde, ein Netzwerk mit einem Softwaresystem zu schaffen, mit dem Terminals auf einfache Art in eine Anwendung eingebunden werden können.

Die Aufgabe wird durch ein Netzwerk der eingangs genannten Art dadurch gelöst, daß das Softwaresystem wenigstens eine spezielle Anwendungs-Softwarekomponente, eine allgemeine Anwendungs-Softwarelomponente und wenigstens eine Steuerungs-Softwarekomponente enthält,
daß eine spezielle Anwendungs-Softwarekomponente zur Repräsentation einer Anwendung vorgesehen ist,
daß eine Steuerungs-Softwarekomponente zur Steuerung aller speziellen Anwendungs-Softwarekomponenten über die allgemeine Anwendungs-Softwarekomponente vorgesehen ist.
Jedes Terminal des erfindungsgemäßen Netzwerks enthält Teile eines verteilten Softwaresystems, um Anwendungen mit einem oder mehreren Terminals realisieren zu können. Das Softwaresystem enthält wenigstens eine spezielle Anwendungs-Sofiwiarckomponente, eine allgemeine Anwendungs-Softwarekomponente und wenigstens eine Steuenmgs-Softwarekomponente. Alle speziellen Anwendungs- und die Steuenmgs-Softwarekomponenten verwenden die allgemeine Anwendungs-Softwarekomponente. Eine Steuerungs-Softwarekomponente wirkt beispielsweise über vorgegebene Schnittstellenbefehle auf die allgemeine Anwendungs-Softwarekomponente ein, um eine spezielle Anwendungs-Softwarekomponente zu manipulieren. Eine Steuerungs-Softwarekomponente kann beispielsweise alle verfügbaren speziellen Anwendungs-Softwarekomponenten bereitstellen oder Manipulations-Werkzeuge für eine Anwendung. Solche Manipulations-Werkzeuge betreffen beispielsweise verschiedene Funktionen einer Aktivität, wie Videorecorder starten/stoppen, Fernsehkanäle wechseln etc. Eine spezielle Anwendungs-Softwarekomponente und eine Steuerungs-Softwarekomponente haben keine direkte Interaktion miteinander, sondern verwenden nur die allgemeine Anwendungs-Softwmkomponente. Durch diesen Softwareaufbau ist es auf einfache Weise möglich, jeweils neue Anwendungen durch Aktivierung spezieller Anwendungs-Soflwarekomponenten und neue Steuerungs-Softwarekomponenten hinzuzufügen.

Die allgemeine Anwendungs-Softwarekomponente enthält eine Registrierungs-Softwarekomponente zur Registrierung aller aktiven speziellen Anwendungs-Softwarekomponenten, eine Verwaltungs-Softwarekomponente zur Verwaltung der aktiven speziellen Anwendungs-Softwarekomponenten und wenigstens eine Informationsfluß-Softwarekomponente zur Steuerung der Informationsflüsse einer Anwendung in Abhängigkeit von einer Steuerungs-Softwarekomponente. Die Registriemngs-Softwarekoiaponente der allgemeinen Anwendungs-Softwarekomponente stellt ferner Eigenschaften der aktiven speziellen Aktivitäten bereit. Eine solche Eigenschaft gibt eine Funktion einer Anwendung an. Beispielsweise ist eine solche Eigenschaft, daß eine Anwendung Femsehkanäle, Internetseiten etc. zeigen kann.

Eine spezielle Anwendungs-Softwarekomponente liefert noch Informationen an die allgemeine Anwendungs-Softwarekomponente über die für eine Anwendung erforderlichen Terminals und Verbindungstopologie.
Wird das Softwaresystem mit Hilfe einer objektorientierten Programmiersprache realisiert, bilden die allgemeine Anwendungs-SoflwarekompoDente, wenigstens eine spezielle Anwendungs-Softwarekomponente und wenigstens eine Steuerungs-Softwarekomponente Klassen. Eine spezielle Anwendungs-Softwarekomponente und eine Steuerungs-Softwarekomponente verwenden nur abgeleitete Objekte der Klasse der allgemeinen Anwendungs-Softwarekomponente. Eine aktivierte spezielle Anwendungs-Softwarekomponente stellt ein Objekt dar, welches ein abgeleitetes Objekt der allgemeinen Anwendungs-Softwarekomponente beinhaltet. Das bedeutet, daß ein Anteil der allgemeinen Anwendungs-Softwarekomponente in jeder aktivierten speziellen Anwendungs-Softwarekomponente integriert ist. Ein abgeleitetes Objekt der allgemeinen Anwendungs-Softwarekomponente kann dann mehrfach vorhanden sein. Für eine Steuenmgs-Softwarekomponente ist ein Objekt der allgemeinen Anwendungs-Softwarekomponente jedoch logisch einmal vorhanden.

Die Erfindung bezieht sich auch auf ein Terminal für ein Netzwerk mit einem Softwaresystem zur Einbindung in eine Anwendung und auf ein Speichermedium mit einem Softwaresystem zur Verwendung in mehreren Terminals eines Netzwerks, welches wenigstens zur Einbindung eines oder mehrerer Terminals in Anwendungen vorgesehen ist.

Ein Ausführungsbeispiel der Erfindung wird nachstehend anhand der Figuren näher erläutert. Es zeigen:
- Fig. 1: ein Netzwerk mit verschiedenen Terminals,
- Fig. 2, 3, 5, 6, 7 und 8: die verschiedenen Softwareebenen des im Netzwerk verwendeten Softwaresystems,
- Fig. 4: eine Menüoberfläche zur Steuerung von Anwendungen im Netzwerk und
- Fig. 9: Teil eines Netzwerks mit zwei Terminals.

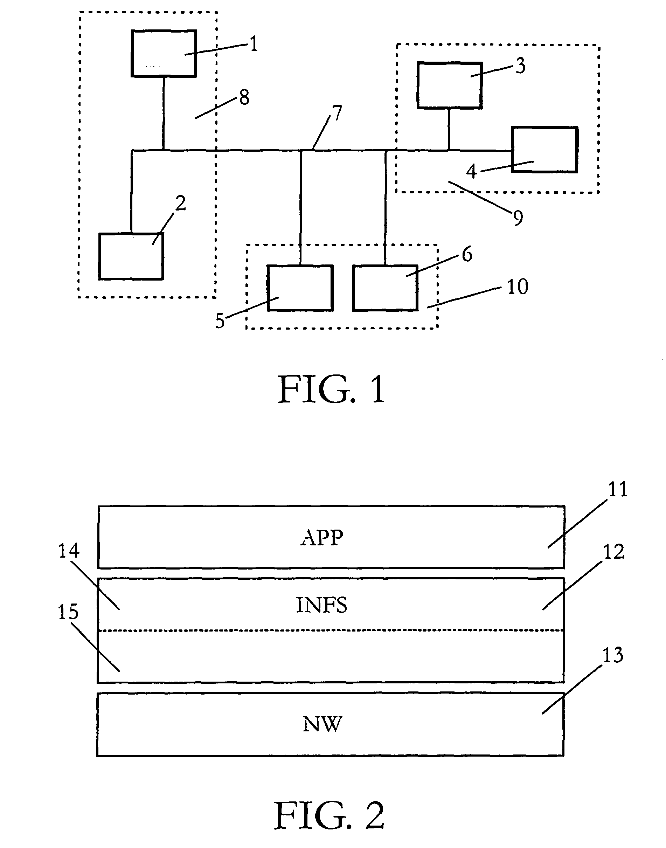

In Fig. 1 ist ein Netzwerk (network) dargestellt, welches verschiedene digitale Geräte 1 bis 6 der Unterhaltungselektronik miteinander koppelt. Solche Geräte 1 bis 6 werden im folgenden Terminals genannt. Ein Terminal 1 bis 6 kann beispielsweise ein Fernsehgerät, ein Tuner, ein Bildschirm, ein CD-Player, ein Videorecorder, eine Set-Top-Box, eine Kamera, ein Lautsprecher usw. sein. Die Terminals 1 bis 6 können untereinander über Kabel 7 (also drahtgebunden) gekoppelt sein. Es ist auch eine drahtlose Kopplung möglich. Hierbei können z.B. Infrarot-, Ultraschall- oder Funkverbindungen verwendet werden. Die Terminals können in unterschiedlichen Wohnräumen angeordnet sein. Beispielsweise können die Terminals 1 und 2 sich in einem ersten Raum 8, die Terminals 3 und 4 in einem zweiten Raum 9 und die Terminals 5 und 6 in einem dritten Raum 10 befinden.

Mit Hilfe eines auf allen Terminals 1 bis 6 enthaltenen, verteilten Softwaresystems, das in dem hier dargestellten Ausführungsbeispiel mit Hilfe einer nicht näher spezifizierten objektorientierten Programmiersprache realisiert ist, werden die im Netzwerk enthaltenen Terminals 1 bis 6 in vom Benutzer gewünschte Anwendungen eingebunden. Beispielsweise kann in dem ersten Raum 8 eine erste Anwendung laufen, die darin besteht, daß ein bestimmtes Fernsehprogramm auf einem als Fernsehgerät ausgebildetem Terminal 1 abgespielt wird, welches z.B. von einem als Set-Top-Box ausgebildeten Terminal 4 in dem zweiten Raum 9 geliefert wird. Eine zweite Anwendung kann beispielsweise darin bestehen, ein von einem Tuner empfangenes Radioprogramm einem Verstärker zu liefern. Der Tuner kann das Terminal 2 in dem ersten Raum 8 und der Verstärker das Tertninal 5 in dem dritten Raum 10 sein. Alle diese Anwendungen werden mit Hilfe von Softwarekomponenten in einheitlicher Form realisiert, die als Aktivitäten (activities) bezeichnet werden. Eine Aktivität enthält mindestens zwei Softwarekomponenten, die als spezielle und allgemeine Anwendungs-Softwarekomponenten oder als spezielle und abstrakte Aktivität bezeichnet werden. Ein Aktivitäts-Objekt wird aus einer speziellen und einer abstrakten Aktivität gebildet. Das Softwaresystem in dem erfindungsgemäßen Netzwerk verwendet ein nicht näher zu erläuterndes Betriebssystem, welches die im Netzwerk verteilten Softwarekomponenten verwalten kann.

Eine spezielle Aktivität stellt eine softwaremäßige Repräsentation einer Anwendung dar und verwendet Funktionen zur Manipulation der in einer Softwarekomponente repräsentierter Terminals. Die Manipulation einer Aktivität wirkt über weitere darunterliegende Softwareschichten auf die unterste, physikalische Schicht und somit auf die Hardware eines jeweils betroffenen Terminals. Die Architektur des Softwaresystems mit einigen beispielhaften Aktivitäten zeigen die Fig. 2, 3, 5 und 6. In der Fig. 2 sind die verschiedenen Softwareebenen dargestellt, die auf dem Betriebssystem aufsetzen. Die erste und oberste Softwareebene 11 ist eine Anwendungsebene (APP), die zweite Softwareebene 12 ist eine Infrastrukturebene (INFS) und die dritte Softwareebene 13 ist eine Netzwerkebene (NW). Die zweite Softwareebene 12 enthält zwei Subebenen 14 und 15. Dies ist in der Fig. 2 durch eine gestrichelt gezeichnete Linie angedeutet. Die untere Subebene 15 enthält System-Softwarekomponenten zur allgemeinen Infrastrukturverwaltung und die obere Subebene 14 eine für die Einbindung von Anwendungen verantwortliche Infrastrukturkomponente.

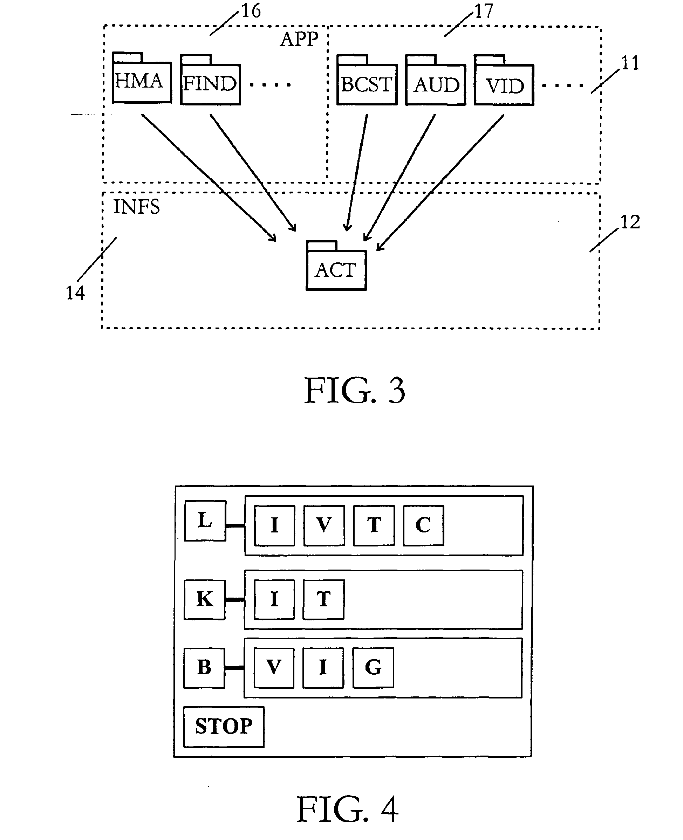

Die obere Softwareebene (APP) 11 und die obere Subebene 14 der zweiten Softwareebene 12 zeigt Fig. 3 etwas detaillierter. Die Fig. 3 stellt die einzelnen Softwarekomponenten als Packungen (packages) in Form von Karteikarten in der Zeichnung dar. Die Packungen geben hier eine Ansammlung von logisch zusammenhängenden Klassen an. Ein Pfeil von einer Packung (z.B. BCST) zu einer anderen Packung (z.B. ACT) bedeutet, das die Packung BCST von der Packung ACT abhängt oder diese verwendet.

Die erste Softwareebene 11 enthält zwei Arten von Packungen, die sich nicht gegeneinander beeinflussen können. Die erste Art von Packungen (Steuerungs-Softwarekomponenten) dient zur Steuerung von Anwendungen und ist in einem ersten Teil 16 der ersten Softwareebene 11 untergebracht. In Fig. 3 sind beispielhaft die Packungen HMA und FIND dargestellt. Ein zweiter Teil 17 der ersten Softwareebene 12 enthält spezielle Aktivitäten (spezielle Anwendungs-Softwarekomponenten). In Fig. 3 sind beispielhaft die speziellen Aktivitäten BCST, AUD und VID gezeigt.

Der erste Teil 16 der ersten Softwareebene 11 enthält Packungen, mit denen spezielle Aktivitäten über vorgegebene Schnittstellenbefehle gesteuert werden können. Solche Schnittstellenbefehle können beispielsweise sein: Aktivität starten, Aktivität beenden, Aktivität ändern etc. Mit den Packungen FIND und HMA können solche Schnittstellenbefehle ausgeführt werden. Die Packung FIND macht über verschiedene Schnittstellenbefehle alle verfügbaren speziellen Aktivitäten präsent, so daß andere Softwarekomponenten auf diese speziellen Aktivitäten zugreifen können. Die Packung HMA liefert eine grafische Benutzer
oberfläche, über die verschiedene Schnittstellenbefehle verarbeitbar sind und mit der Manipulationen der Aktivitäten und eine Überwachung des Netzwerks möglich ist.

Ein Beispiel für eine Menüoberfläche, die mit Hilfe der Packung HMA auf einem Bildschirm darstellbar ist, zeigt Fig. 4. Diese Menüoberfläche gibt eine Übersicht aller vorhandenen Aktivitäten in drei Räumen an. Diese drei Räume werden in dem Menü durch einen Icon repräsentiert, die als Block mit den Bezeichnungen "L", "K" und B" dargestellt sind. Diese die Räume kennzeichnenden Icons "L", "K" und "B" sind über eine Linie mit jeweils einem Kasten verbunden, in dem weitere Icons enthalten sind. Diese Icons sind als Block mit den Bezeichnungen "I", "V", "T", "C" und "G" dargestellt und repräsentieren Aktivitäten in den einzelnen Räumen. Beispielsweise gibt das dem Raum "B" zugeordnete und hervorgehobene Icon mit der Bezeichnung "V" an, das eine Videokonferenz in dem Raum "B" läuft. Durch Auswahl eines Icons mit Hilfe geeigneter Eingabegeräte (z.B. Fernbedienung, Touch screen etc.) kann gegebenenfalls ein Untermenü aufgerufen werden und auf dem Bildschirm dargestellt werden, um weitere Auswahlmöglichkeiten für eine gewünschte Aktivität zu bekommen. Das als Kasten dargestellte Icon mit der Bezeichnung "Stop" ist hier zum Beenden einer oder mehrerer ausgewählter Aktivitäten vorgesehen.

Die beispielhaft aufgeführten speziellen Aktivitäten BCST, AUD und VID repräsentieren jeweils eine Anwendung. Die Packungen im ersten Teil 16 der ersten Softwareebene 11 sind von diesen speziellen Aktivitäten nicht abhängig. In der ersten Softwareebene 11 können im ersten Teil 16 noch weitere Packungen und im zweiten Teil 17 noch weitere spezielle Aktivitäten enthalten sein. Dies ist jeweils durch eine gepunktete Linie in Fig. 3 angedeutet.

Mit der speziellen Aktivität BCST wird die Anwendung "digitale Videoverteilung" (digital video broadcast) realisiert, bei der ein von einer Set-Top-Box empfangenes Videoprogramm einem Fernseher zugeführt wird. Die spezielle Aktivität AUD ermöglicht, ein digitales Audioprogramm über einen Verstärker abzuspielen. Eine Videokonferenz wird mit Hilfe der speziellen Aktivität VID ermöglicht.

In Fig. 3 ist noch die obere Subebene 14 der zweiten Softwareebene 12 mit einer Packung ACT dargestellt. Diese Packung ACT ist eine abstrakte Aktivität (allgemeine Anwendungs-Softwarekomponente) und enthält Klassen, die von den Packungen des ersten Teils 16 und den speziellen Aktivitäten des zweiten Teils 17 der ersten Softwareebene 11 verwendet werden. Diese abstrakte Aktivität ACT stellt somit die Basis der verschiedenen Aktivitäten und Packungen der ersten Softwareebene 11 dar. Die Packungen und speziellen Aktivitäten der ersten Softwareebene 11 verwenden nur Objekte der abstrakten Aktivität ACT und haben auch keine direkte Interaktion miteinander. Die speziellen Aktivitäten stellen eine anwendungsspezifische Detaillierung der abstrakten Aktivität dar. Ein Objekt der speziellen Aktivität wird durch Integration eines abgeleiteten Objekts der abstrakten Aktivität gebildet. Die Packungen des ersten Teils 16 ermöglichen die einheitliche Steuerung aller speziellen Aktivitäten. Durch diesen Softwareaufbau ist es auf einfache Weise möglich, neue Packungen bzw. neue spezielle Aktivitäten zum ersten bzw. zweiten Teil 16 bzw. 17 der ersten Softwareebene 11 hinzuzufügen.

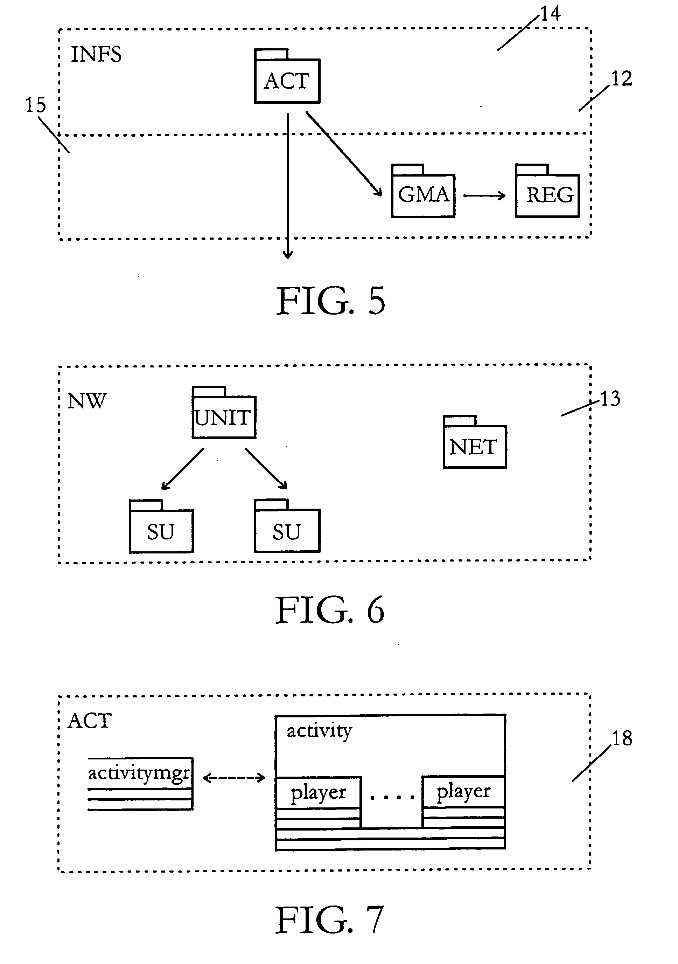

Ein Beispiel für die in der unteren Subebene 15 der zweiten Softwareebene 12 zu verwendenden Packungen zeigt Fig. 5. Diese untere Subebene 15 enthält die Packungen GMA und REG. Die Packung GMA enthält ein Modell der zugrundeliegenden Verbindungstopologie und stellt in Abhängigkeit von Anforderungen der abstrakten Aktivität ACT Verbindungen zwischen den verschiedenen Terminals her und verwaltet Netzwerk-Resourcen. Hierbei kontaktiert die Packung GMA die Packung REG, um Informationen über alle im Netzwerk verfügbaren Terminals und Netzwerkverbindungen zu erhalten. Es können in der unteren Subebene 15 der zweiten Softwareebene 12 auch andere bekannte Softwarekomponenten, wie beispielsweise nach der HAVi-Spezifikation (HAVi = Home Audio/Video Interoperability Architecture) verwendet werden. Näheres zu der HAVi-Spezifikation wird beispielsweise in Ralf Steinmetz (Hrsg.): "Kommunikation in verteilten Systemen (KiVS)", 11. ITG/GI-Fachtagung, Darmstadt, 2.-5. März 1999; Stephan Abramowski, Heribert Baldus, Tobias Helbig: "Digitale Netze in Wohnungen-Unterhaltungseleh-tronik im Umbruch", Seiten 340 bis 351, ausgeführt.

Die dritte Softwareebene 13 enthält Packungen zur Repräsentation von Terminals und Netzwerkeinheiten (Fig. 6). Ein Terminal wird durch eine Packung UNIT repräsentiert und eine Netzwerkeinheit durch eine Packung NET. Ein Terminal kann verschiedene Sub-Funktionen besitzen. Beispielsweise weist ein Receiver eine Verstärker- und eine Tuner-Funktion auf. Diese Sub-Funktionen werden in der dritten Softwareebene durch Packungen realisiert, die als SU bezeichnet werden und von einer Packung UNIT abhängig sind. In der Fig. 6 ist jeweils nur eine Packung UNIT und eine Packung NET dargestellt. Es können jedoch weitere dieser Packungen in dieser Softwareebene 13 vorhanden sein. Die verschiedenen Softwarerepräsentanten UNIT, SU und NET der dritten Softwareebene 13 werden von der Packung GMA der unteren Subebene 15 der zweiten Softwareebene 12 so miteinander verknüpft, daß die jeweiligen Packungen UNIT, SU und NET gemäß der Aufgabe einer speziellen Aktivität eingesetzt werden. Auch in der dritten Softwareebene 13 können bekannte Softwarekomponenten verwendet werden. Beispielsweise können die Softwarekomponenten vorgesehen werden, welche bei der schon oben genannten HAVi-Spezifikation eingesetzt werden.

Die wichtigsten abstrakten Klassen der abstrakten Aktivität ACT der oberen Subebene 14 der zweiten Softwareebene 12 zeigt Fig. 7. Die abstrakte Aktivität ACT ist in Fig. 7 als mit einer unterbrochen Linie gezeichneter Block 18 dargestellt und enthält die abstrakten Klassen activity, player und activitymgr (Verwaltungs-, Informationsfluß- und Registrierungs-Softwarekomponente). Die abstrakte Klasse activitymgr registriert alle aktiven speziellen Aktivitäten und stellt verschiedenen Klassen, wie z.B. aus der Packung FIND abgeleitete Klassen, Informationen über die Eigenschaften aller aktiven speziellen Aktivitäten zur Verfügung. Der wichtigste Teil einer abstrakten Klasse der abstrakten Aktivität ACT ist eine abstrakte Klasse player, welche die Informationsflüsse einer Aktivität verwaltet und steuert. Darunter ist z.B. eine Wiedergabe, eine Aufnahme etc. von Informationen zu verstehen. Die abstrakte Klasse player kann einfach oder mehrfach in Abhängigkeit von der Komplexität einer Verwaltungs- und Steuerungsaufgabe vorhanden sein. Eine abstrakte Klasse player bildet eine eigene Klasse und ist Bestandteil der abstrakten Klasse activity. Die abstrakte Klasse activity hat sonst noch Verwaltungsaufgaben, die sich auf die Einbindung, Löschung, Registrierung etc. von allen speziellen Aktivitäten beziehen.

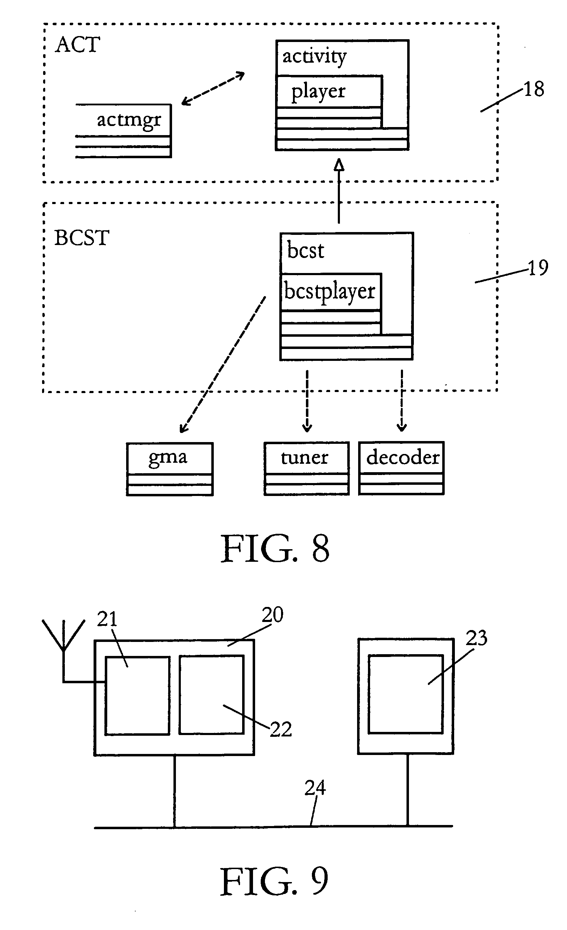

Wie in Fig. 8 gezeigt wird, muß für jede spezielle Aktivität der ersten Softwareebene 11 analog zur Bildung einer abstrakten Klasse der abstrakten Aktivität eine Unterklasse abgeleitet werden, deren Basis die Klassen der abstrakten Aktivität ACT bildet. Beispielsweise ist der speziellen Aktivität BCST (Block 19) die Unterklasse bcst für eine digitale Videoverteilung zugeordnet. Hierzu gehört auch eine Unterklasse bcstplayer, die analog zu einer abstrakten Klasse player abgeleitet worden ist. Die weiter in Fig. 8 dargestellten Klassen tuner und decoder sind die softwaremäßigen Repräsentanten von Terminals. Die weitere aus der Packung GMA abgeleitete Klasse gma ist nach Aufruf durch eine abstrakte Klasse player zur Verbindungssteuerung von Terminals und von Netzwerkenheilen zuständig.

Der zeitliche Ablauf der speziellen Aktivität BCST (digitale Videoverteilung) wird im folgenden näher erläutert. Bei diesem Ablaufbeispiel werden die in Fig. 9 gezeigten Terminals verwendet. Ein erstes Terminal 20 mit zwei Untereinheiten 21 und 22 und ein zweites Terminal 23 sind mit Netzwerkverbindungen 24 gekoppelt. Das Terminal 20 stellt eine Set-Top-Box und Terminal 23 einen Decoder dar. Das Terminal 20 ist mit einer Antenne verbunden und enthält einen Tuner (Untereinheit 21) und einen Demultiplexer (Untereinheit 22). Das zweite Terminal 23 kann mit einem hier nicht dargestellten Bildschirm gekoppelt werden. Diese Hardware-Einheiten 20 bis 23 haben jeweils softwaremäßige Repräsentanten, welche die Aktivität BCST benötigen

Im folgenden werden bei der Beschreibung des zeitlichen Ablaufs der speziellen Aktivität BCST Objekte von Klassen erwähnt. Hierbei wird folgende Notation verwendet: Ein Objekt der Klasse x wird als Objekt x bezeichnet.

Ein Benutzer möchte einen bestimmten Fernsehkanal empfangen (z.B. ARD, CNN etc.) und diesen Fernsehkanal mit Hilfe des erwähnten Bildschirms ansehen. Dieser Wunsch wird über eine Benutzerschnittstelle eingegeben. Mit Hilfe des Objekts find, das ein Objekt der aus der Packung FIND abgeleiteten Klasse find ist (vgl. Fig. 3), wird ein Objekt bcst der speziellen Aktivität BCST initialisiert (aktiviert) und für bestimmte Objekte präsent gemacht. Das Objekt bcst wird mit Hilfe eines Objekts actmgr registriert und erzeugt ein Objekt bcstplayer (vgl. Fig. 8). Das Objekt bcstplayer bestimmt die erforderlichen Terminals, welche für die Aktivität BCST erforderlich sind. Weiter überprüft das Objekt bcstplayer, ob diese Terminals vorhanden sind, und liefert dann eine Beschreibung der gewünschten Terminal-Verbindungen zu einem Objekt gma. Das Objekt gma fragt beim Objekt reg (vgl. Fig. 5) an, ob ein einen Tuner repräsentierendes Objekt tuner, ein einen Demultiplexer repräsentierendes Objekt demultiplexer und ein einen Decoder repräsentierendes Objekt decoder registriert sind. Das Objekt reg liefert dem Objekt gma Referenzen der Objekte tuner, demultiplexer und decoder. Diese Objekte tuner, demultiplexer und decoder liefern dem Objekt gma die Information, ob die den Objekten tuner, demultiplexer und decoder zugeordneten Terminals (Tuner, Demultiplexer und Decoder) verfügbar sind. Falls die Terminals verfügbar sind, werden diese von dem Objekt gma reserviert. Anschließend erhält das Objekt gma von einem Objekt net, das für die Netzwerkverwaltung verantwortlich ist, Resourcen (d.h. einen Übertragungskanal mit der benötigten Übertragungskapazität) für den Datenstrom zugewiesen. Das Objekt gma initiiert dann die (interne) Verbindung des Objekts tuner mit dem Objekt demultiplexer, und weist anschließend den Objekten demultiplexer und decoder den reservierten Übertragungskanal für einen Datenstrom zu. Damit ein Kanal auf dem Bildschirm angezeigt wird, sendet das Objekt bcstplayer entsprechende Schnittstellenbefehle zu den Objekten tuner, demulti.. plexer und decoder.

## Patentansprüche

1. Netzwerk mit Terminals und einem auf allen Terminals verteiltem Softwaresystem wenigstens zur Einbindung eines oder mehrerer Terminals in Anwendungen, wobei das Softwaresystem wenigstens eine spezielle Anwendungs-Softwarekomponente (17), eine allgemeine Anwendungs-Softwerekomponente (14) und wenigstens eine Steuerungs-Softwarekompanentere (16) enthält,
wobei eine spezielle Anwendungs-Softwarekomponente (17) zur Repräsentation einer Anwendung vorgesehen ist,
eine Steuerungs-Softwarekomponente (16) zur Steuerung aller speziellen Anwendungs -Softwarekomponente (17) über die allgemeine Anwendungs-Softwarekomponente (14) vorgesehen ist, und wobei die allgemeine Anwendungs-Softwarekomponente eine Registrierungs-Softwarekomponente (18) zur Registrierung aller aktiven speziellen Anwendungs-Softwarekomponenten (17), eine Verwaltungs-Softwarekomponente (18) zur Verwaltung der aktiven speziellen Anwendungs-Softwarekomponenten (17) und wenigstens eine Informationsfluss-Softwarekomponente (18) zur Steuerung der Informationsflüsse einer Anwendung in Abhängigkeit von einer Steuerungs-Softwarekomponente (16) enthält.

2. Netzwerk nach Anspruch 1,
**dadurch gekennzeichnet**
**dass** die Registrierungs-Softwarekomponente (18) der allgemeinen Anwendungs-Softwarekomponente (14) femer zur Bereitstellung von Eigenschaften der aktiven speziellen Aktivitäten vorgesehen ist.

3. Netzwerk nach Anspruch 1,
**dadurch gekennzeichnet,**
**dass** eine spezielle Anwendungs-Softwarekomponente (17) zur Lieferung der Informationen an die allgemeine Anwendungs-Softwatekomponente (14) darüber vorgesehen ist, welche Terminals und welche Verbindungstopologie für eine Anwendung erforderlich sind.

4. Netzwerk nach Anspruch 1,
**dadurch gekennzeichnet,**
**dass** die allgemeine Anwendungs-Softwarekomponente (14), wenigstens eine spezielle Anwendungs-Softwarekomponente (17) und wenigstens eine Steuerungs-Softwarekomponente (16) Klassen bilden und
**dass** eine spezielle Anwendungs-Softwarekomponente (17) und eine Steuerungs-Softwarekomponente (16) nur zur Verwendung von abgeleiteten Objekten der Klasse der allgemeinen Anwendungs-Softwarekomponente (14) vorgesehen sind.

5. Netzwerk nach Anspruch 4,
**dadurch gekennzeichnet,**
**dass** eine aktivierte spezielle Anwendungs-Softwarekomponente (17) ein Objekt darstellt, welches ein abgeleitetes Objekt der allgemeinen Anwendungs-Softwarekomponente (14) beinhaltet.

6. Terminal für ein Netzwerk mit einem Softwaresystem zur Einbindung in eine Anwendung, wobei das Softwaresystem wenigstens eine spezielle Anwendungs-Softwarekomponente (17), eine allgemeine Anwendungs-Sofbvarekomponente (14) und wenigstens eine Steuerungs-Softwarekomponente (16) enthält, wobei eine spezielle Anwendungs-Softwarekomponen (17) zur Repräsentation einer Anwendung vorgesehen ist, eine Steuerungs-Softwarekomponente (16) zur Steuerung aller speziellen Anwendungs-Softwarekomponenten (17) über die allgemeine Anwendungs-Softwarekomponente (14) vorgesehen ist und wobei die allgemeine Anwendungs-Softwarekomponente (14) eine Registrierungs-Softwarekomponente (18) zur Registrierung aller aktiven speziellen Anwendungs-Softwarekomponenten (17) eine Veraltungs-Sofiwarekomponente (18) zur Verwaltung der aktiven speziellen Anwendungs-Softwarekomponenten (17) und wenigstens eine Informationsfluss-Softwarekomponente (18) zur Steuerung der Informationsflüsse einer Anwendung in Abhängigkeit von einer Steuerungs-Softwarekomponente (16) enthält.

7. Speichermedium mit einem Softwaresystem zur Verwendung in mehreren Terminals eines Netzwerks, welches wenigstens zur Einbindung eines oder mehrerer Terminals in Anwendungen vorgesehen ist, wobei das Softwaresystem wenigstens eine spezielle Anwendungs-Softwarekomponente (17), eine allgemeine Anwendungs-Softwarekomponente (14) und wenigstens eine Steuerungs-Softwarekomponente (16) enthält, wobei eine spezielle Anwendungs-Softwarekomponente (17) zur Repräsentation einer Anwendung vorgesehen ist, eine Steuerungs-Softwarekomponente (16) zur Steuerung aller speziellen Anwendungs-Softwarekomponenten (17) über die allgemeine Anwendungs-Softwarekomponente (14) vorgesehen ist und wobei die allgemeine Anwendungs-Softwarekomponente (14) eine Registnerungs-Softwarekomponente (18) zur Registrierung aller aktiven speziellen Anwendungs-Softwarekomponente (17), eine Verwaltungs-Softwarekomponente (18) zur Verwaltung der aktiven speziellen Anwendungs-Softwarekomponenten (17) und wenigstens eine Informationsfluss-Softwarekomponente (18) zur Steuerung der Informationsflüsse einer Anwendung in Abhängigkeit von einer Steuerungs-Softwarekomponente (16) enthält.

## Claims

1. A network with terminals and a software system which is distributed among all terminals at least to involve one or more terminals in applications, **characterized in that** the software system includes at least one special application software component (17), a general application software component (14) and at least one control software component (16), **in that** a special application software component (17) is provided so as to represent an application, a control software component (16) is provided so as to control all special application software components (17) via the general application software component (14), and **in that** the general application software component includes a registration software component (18) so as to register all active special application software components (17), a management software component (18) so as to manage the active , special application software components (17) and at least one information flow software component (18) so as to control the information flow of an application in dependence on a control software component (16).

2. A network as claimed in claim 1, **characterized in that** the registration software component (18) of the general application software component (14) is also arranged to offer features for the active special activities.

3. A network as claimed in claim 1, **characterized in that** a special application software component (17) is also provided to supply the general application software component (14) with information concerning which terminals and connection topology are required for an application.

4. A network as claimed in claim 1, **characterized in that** the general application software component (14), at least one special application software component (17) and at least one control software component (16) form classes and **in that** a special application software component (17) and a control software component (16) are provided only for use of derived objects of the class of the general application software component (14).

5. A network as claimed in claim 4, **characterized in that** an activated special application software component (17) represents an object which comprises a derived object of the general application software component (14).

6. A terminal for a network with a software system, intended to be taken up in an application, **characterized in that** the software system includes at least one special application software component (17), a general application software component (14) and at least one control software component (16), **in that** a special application software component (17) is provided so as to represent an application, and **in that** a control software component (16) is provided so as to control all special application software components (17) via the general application software component (14) and **in that** the general application software component (14) includes a registration software component (18) so as to register all active special application software components (17), a management software component (18) so as to manage the active special application software components (17) and at least one information flow software component (18) so as to control the information flow of an application in dependence on a control software component (16).

7. A storage medium with a software system for use in a plurality of terminals of a network, provided so as to take up one or more terminals in applications, **characterized in that**
the software system includes at least one special application software component (17), a general application software component (14) and at least one control software component (16), **in that** a special application software component (17) is provided so as to represent an application, and **in that** a control software component (16) is provided so as to control all special application software components (17) via the general application software component (14), and **in that** the general application software component (14) includes a registration software component (18) so as to register all active special application software components (17), a management software component (18) so as to manage the active special application software components (17) and at least one information flow software component (18) so as to control the information flow of an application independence on a control software component (16).

## Revendications

1. Réseau avec des terminaux et un système logiciel distribué sur tous les terminaux, au moins pour l'intégration d'une ou plusieurs terminaux dans des applications, dans lequel
le système logiciel contient au moins un composant logiciel d'application spécial (17), un composant logiciel d'application général (14) et au moins un composant logiciel de commande (16),
il est prévu un composant logiciel d'application spécial (17) pour la représentation d'une application,
un composant logiciel de commande (16) est prévu pour la commande de tous les composants logiciels d'application spéciaux (17) par l'intermédiaire du composant logiciel d'application général (14) et dans lequel
le composant logiciel d'application général contient un composant logiciel d'enregistrement (18) pour l'enregistrement de tous les composants logiciels d'application spéciaux actifs (17), un composant logiciel d'administration (18) pour l'administration des composants logiciels d'application spéciaux actifs (17) et au moins un composant logiciel du flux d'information (18) pour la commande des flux d'information d'une application en fonction d'un composant logiciel de commande (16).

2. Réseau selon la revendication 1,
**caractérisé en ce**
**que** le composant logiciel d'enregistrement (18) du composant logiciel d'application général (14) est par ailleurs prévu pour la fourniture de propriétés des activités spéciales actives.

3. Réseau selon la revendication 1,
**caractérisé en ce**
**qu'**un composant logiciel d'application spéciale (17) est prévu pour la fourniture des informations au composant logiciel d'application général (14) à propos des terminaux et de la topologie de liaison qui sont nécessaires pour une application.

4. Réseau selon la revendication 1,
**caractérisé en ce**
**que** le composant logiciel d'application général (14), au moins un composant logiciel d'application spécial (17) et au moins un composant logiciel de commande (16) forment des classes et
**qu'**un composant logiciel d'application spécial (17) et un composant logiciel de commande (16) sont prévus seulement pour l'utilisation d'objets dérivés de la classe du composant logiciel d'application général (14).

5. Réseau selon la revendication 4,
**caractérisé en ce**
**qu'**un composant logiciel d'application spécial activé (17) représente un objet qui contient un objet dérivé du composant logiciel d'application général (14).

6. Terminal pour un réseau avec un système logiciel pour l'intégration dans une application, dans lequel le système logiciel contient au moins un composant logiciel d'application spécial (17), un composant logiciel d'application général (14) et au moins composant logiciel de commande (16), dans lequel un composant logiciel d'application spécial (17) est prévu pour la représentation d'une application, un composant logiciel de commande (16) pour la commande tous les composants logiciels d'application spéciaux (17) par l'intermédiaire du composant logiciel d'application général (14) et dans lequel le composant logiciel d'application général (14) contient un composant logiciel d'enregistrement (18) pour l'enregistrement de tous les composants logiciels d'application spéciaux actifs (17), un composant logiciel d'administration (18) pour l'administration des composants logiciels d'application spéciaux actifs (17) et au moins un composant logiciel de flux d'information (18) pour la commande des flux d'information d'une application en fonction d'un composant logiciel de commande (16).

7. Support d'enregistrement avec un système logiciel pour une utilisation dans plusieurs terminaux d'un réseau qui est prévu au moins pour l'intégration d'un ou plusieurs terminaux dans des applications, dans lequel le système logiciel contient au moins un composant logiciel d'application spécial (17), un composant logiciel d'application général (14) et au moins composant logiciel de commande (16), dans lequel un composant logiciel d'application spécial (17) est prévu pour la représentation d'une application, un composant logiciel de commande (16) pour la commande de tous les composants logiciels d'application spéciaux (17) par l'intermédiaire du composant logiciel d'application général (14) et dans lequel le composant logiciel d'application général (14) contient un composant logiciel d'enregistrement (18) pour l'enregistrement de tous les composants logiciels d'application spéciaux actifs (17), un composant logiciel d'administration (18) pour l'administration des composants logiciels d'application spéciaux actifs (17) et au moins un composant logiciel de flux d'information (18) pour la commande des flux d'information d'une application en fonction d'un composant logiciel de commande (16).
